# EUROPEAN PATENT SPECIFICATION

(11) **EP 0 818 959 B1**
(45) Date of publication and mention of the grant of the patent: **16.12.1998**
(21) Application number: 96907787.4
(22) Date of filing: 02.04.1996
(51) Int. Cl.: A23L 1/325, A23B 4/06, A23B 4/08

(54) **DEVICE FOR CARRYING OUT A METHOD FOR PROCESSING FISH, IN PARTICULAR SALMON**
VORRICHTUNG ZUR DURCHFÜHRUNG EINES VERFAHRENS ZUR VERARBEITUNG VON FISCH, INSBESONDERE LACHS
PROCEDE ET DISPOSITIF DE TRAITEMENT DU POISSON, NOTAMMENT DU SAUMON

(30) Priority: 03.04.1995 NL 1000026
(43) Date of publication of application: 21.01.1998
(73) Proprietor: H. van Wijnen B.V., 2921 LR Krimpen a/d Ijssel (NL)
(72) Inventor: DE SNOO, Paul, NL-2861 CB Bergambacht (NL); VAN BERGHEM, Karel, NL-3013 CE Rotterdam (NL)
(74) Representative: Hooiveld, Arjen Jan Winfried
(86) International application number: NL9600140
(87) International publication number: WO9631131

(56) References cited:
- WO-A-95/16364
- CA-A- 1 151 369
- FR-A- 2 137 873
- NL-C- 108 224
- US-A- 1 936 814
- PATENT ABSTRACTS OF JAPAN vol. 009, no. 331 (C-321), 25 December 1985 & JP,A,60 160839 (NICHIRO GIYOGIYOU KK), 22 August 1985, & DATABASE WPI Week 8540 Derwent Publications Ltd., London, GB; AN 85-245680 & JP,A,60 160 839 (NICHIRO GYOGO KK) , 22 August 1985

## Description

The invention relates to a device for carrying out a method for processing fish, wherein the fish is cut into parts and the fish parts are subsequently bonded together by treating them with a bonding agent preferably consisting of a mixture of fibrinogen and thrombin.

This bonding agent is widely used in the meat-processing industry. Fibrinogen is a protein, which can be industrially recovered from the blood of beef cattle and which in combination with thrombin forms fibrin. The actual function of fibrin is to enable coagulation of blood, but the strong fibrin network has also appeared to be suitable for bonding chunks of meat together.

In a publication by the leading producer of the bonding agent, Harimex B.V., "FIBRI FACTS" - Vol. 1 - Issue 1 (August 1993), an example is given of the use of the bonding agent, whereby chunks of beef are treated with the bonding agent, placed in a cylindrical mould and compressed by means of an compressed air-operated press. The mould is then cooled for a predetermined period of time, during which time the bonding is formed, after which the beef having the shape thus obtained can be readily cut into exactly equal parts.

An important aspect of the said method is that all chunks of beef of a roughly corresponding quality can be used, that is, also those chunks of meat that would normally be unsalable because of their deviating shape and/or weight. It has now become possible to cut the desired quantities with great precision from the bonded chunks of meat having the shape thus obtained, because said shape will remain constant. More important even is the fact that it is now possible to cut exactly the same weight quantities having the same shape.

Said publication furthermore makes mention of the fact that the bonding agent can be used for all sorts of red meat and also for fish.

With fish the importance of "portion control", that is, being able to deliver parts which constantly have exactly the same dimensions and practically exactly the same weight may be even more important than for meat. Think for example of the catering industry, where it is extremely important in the preparation of ready-to-eat meals that a measured quantity of the desired species of fish can be put on a plate or on a roll, and that it is not necessary to check with every new plate or roll whether one or several slices must be taken from a stock of unequal slices in order to obtain an even distribution. Furthermore the catering company will desire a certain dimension of the product dependent on its use.

In practice it has become apparent, however, that with fish a number of problems present themselves, in particular with smoked fish, such as smoked salmon, for example. Generally an oil film is present on the outside of smoked fish, which makes it practically impossible to apply the bonding agent. Instead of smoking the fish the characteristic smoked taste may also be obtained by injecting the fish with smoke essences, a technique which is known per se, which makes it possible to provide the bonding agent after all.

However, when fish parts treated with the bonding agent are placed in a mould spaces are formed between the respective fish parts and between the fish parts and the mould. When slices are cut from such a block of fish said spaces can be clearly distinguished. Apart from the fact that this results in a less attractive slice, which moreover may disintegrate, the main drawback is that said "portion control" cannot be absolutely ensured in this manner.

It has become apparent that it is not possible to remove the spaces thus formed by compressing the block of fish parts, since the bonding agent will be pressed out from between the fish parts and hardly any bonding, if at all, is obtained in that case. The shape of the fish parts, which varies from straight to distinctly curved in longitudinal direction, furthermore makes it necessary that in order to remove all spaces from the block a pressure of such magnitude must be exerted, that the typical structure of the fish is largely or entirely lost as a result of the deformation caused thereby.

It is noted that processing of fish as referred to above is not restricted to the preferred bonding agent comprising a mixture of fibrinogen and thrombin. Good results are also obtained with other bonding agents, in particular transglutaminase. In another preferred embodiment sodium chloride is added to the transglutaminase.

In Dutch Patent Application Nr. 9401943 (not pre-published) in the name of the same Applicant it is proposed, in order to obviate the above-described drawback, to place the fish parts in a mould after treating them with a bonding agent, whereby the spaces formed between the fish parts and between the fish and the boundaries of the mould on placing the fish parts in the mould are filled up in the following manner. Part of the fish is minced, the minced part is treated with the bonding agent and the mixture thus obtained is used as a filler for the spaces formed. Prior to this the fish may be injected with a brine solution and smoke essences, using a known technique, and then be dried briefly.

An important drawback of the method according to the aforesaid Dutch Patent Application Nr. 9401943 is that it comprises relatively many steps and consequently is laborious, which makes the method disclosed therein less attractive from an economic point of view. Thus it is necessary, as has already been described above, to mince part of the fish, the minced part must then be treated with the bonding agent, after which the spaces formed between the fish parts and between the fish and the boundaries of the mould must be filled up with the treated mixture. Moreover, the block obtained after said bonding must be cut into block segments, after which the block segments must be successively bonded to each other with the bonding agent consisting of fibrinogen and thrombin. In this manner a length of bonded fish block segments is obtained, from which slices having fixed dimensions and the desired weight can be cut at great speed with an industrial meat slicer.

In order to obviate the drawbacks of the method described in Dutch Patent Application No. 9401943 referred to above it is proposed in Dutch Patent Application Nr. 1000026 (not pre-published), likewise in the name of the same Applicant, to cut the fish into flat pieces, whereby said flat pieces vary so little in thickness per flat piece that when the flat pieces are placed one on top of the other in a mould, with the bonding agent being provided between the respective flat pieces, a massive column of fish is formed as a result of the flat pieces being deformed whilst retaining their structure. By placing flat pieces of salmon having relatively small dimensions one on top of the other in a mould, the flat pieces will fully butt against each other - without any interspaces being formed - because each flat piece will slightly deform because of the small variations in thickness, without the fish structure therein being damaged for that matter. Especially with salmon this is very important, because this species has a delicate but especially characteristic (recognizable) structure, and because a salmon exhibits relatively large variations in thickness lengthwise in comparison with other fish species. It will be apparent that in contrast to the method disclosed in the aforesaid Dutch Patent Application No. 9401943, said filling up with a mixture of minced salmon and the bonding agent as well as said cutting into block segments is no longer necessary. In another embodiment the process according to Dutch patent application No. 1000026 is applied for halibut.

The object of the invention is to provide a simple, inexpensive and user-friendly device, with which the method according to Dutch Patent Application No. 1000026 can be carried out in an elegant, efficient and hygienic manner.

In order to accomplish that objective a device according to the invention characterized in that said device comprises an elongated mould with means for holding said mould vertical in longitudinal direction during filling with flat pieces of salmon/halibut, said mould having a side relatively movable in the longitudinal direction of the mould so as to being able to relatively move up with a growing column of salmon/halibut in the mould, wherein internal cross-dimensions of the mould at least substantially correspond to cross-dimensions of the flat pieces of salmon/halibut placed one on top of each other in abutting relationship in the longitudinal direction of the mould and forming a massive column of salmon/halibut therein as a result of the flat pieces being deformed under the influence of gravity whilst retaining their typical salmon/halibut structure. The dimensions of the elongated mould are such that when the flat pieces of fish are placed one on top of each other in abutting relationship in the longitudinal direction of the mould, said flat pieces will at least substantially butt against the inner wall of the mould with their longitudinal edges. The mould is preferably elongated in vertical direction, so that the flat pieces of fish will fully butt against each other as a result of being deformed (whilst retaining the typical fish structure) under the influence of gravity, whereby the. forming of interspaces is prevented.

In another embodiment of a device according to the invention the mould is at least substantially rectangular, seen in cross sectional view, having a cross length and a cross width which range, independently of each other, from 8 - 12 cm, in particular from 9 - 11 cm, but which are both preferably about 10 cm. These dimensions are to be recommended in the light of some applications, especially in the catering industry, the slices of salmon having a surface area approximately equal to that of a white tin-sandwich are obtained in this manner. This furthermore provides an additional advantage for the retail trade, namely the fact that a fixed number of slices of salmon, for example four, is used per fixed packaged weight of the salmon, for example 100 g.

In another embodiment of a device according to the invention the mould is at least substantially rectangular, seen in cross sectional view, having a cross length and a cross width which range, independently of each other, from 3 - 7 cm, in particular from 4 - 6 cm, but which are both preferably about 5 cm. Using this specific mould advantageously results in slices of smoked salmon having a surface area approximately equal to that of various types of toast, crackers and the like. Furthermore it may be considered to use them in aeroplane catering, where platforms comprising food compartments having fixed dimensions are used.

In another embodiment of a device according to the invention the mould is provided with side walls, a bottom and a cover which are detachably connected with each other. This makes it possible to transport the mould in individual parts in an economic manner, whilst furthermore the cleaning of the mould can take place in a sanitary manner. Instead of using the detachable side walls, bottom and cover parts it may also be preferred to hinge said parts together, so that the parts are capable of swinging out.

In another embodiment of the device according to the invention the cover and the rest of the mould are movable with respect to each other. The cover is preferably movable in the longitudinal direction of the mould. When placing the flat pieces of salmon one on top of the other in the mould, the massive column of fish thus formed will not fall out of the mould, since the movable cover will move up, whether or not automatically, along with the growing column of fish. In particular the mould is detachably connected to the rest of the mould, so that the mould with the massive column of fish present therein can be cooled/frozen to a temperature which enables the separate further processing of the massive column of fish. Important is thereby the fact that interspaces which may still have formed between the flat pieces of fish will be filled up as a result of the fact that said cooling/freezing will cause the fish to expand.

The invention will be explained in more detail hereafter with reference to Figures illustrated in a drawing, wherein:
Figure 1 schematically shows the various steps of an embodiment of a method for processing fish whereby a device according to the invention is used for carrying out the method;
Figures 2a, 2b and 2c show various separate parts of a mould used with the method according to Figure 1 and being part of a device according to the invention;
Figure 3 schematically shows, partly in cut-away view, the mould of Figure 2 as it is built up of the various parts;
Figure 4 schematically shows an embodiment of a device according to the invention;
Figure 5 shows another embodiment of the device according to Figure 4; and
Figure 6 shows an embodiment of a mould opener, which forms part of a device according to the invention.

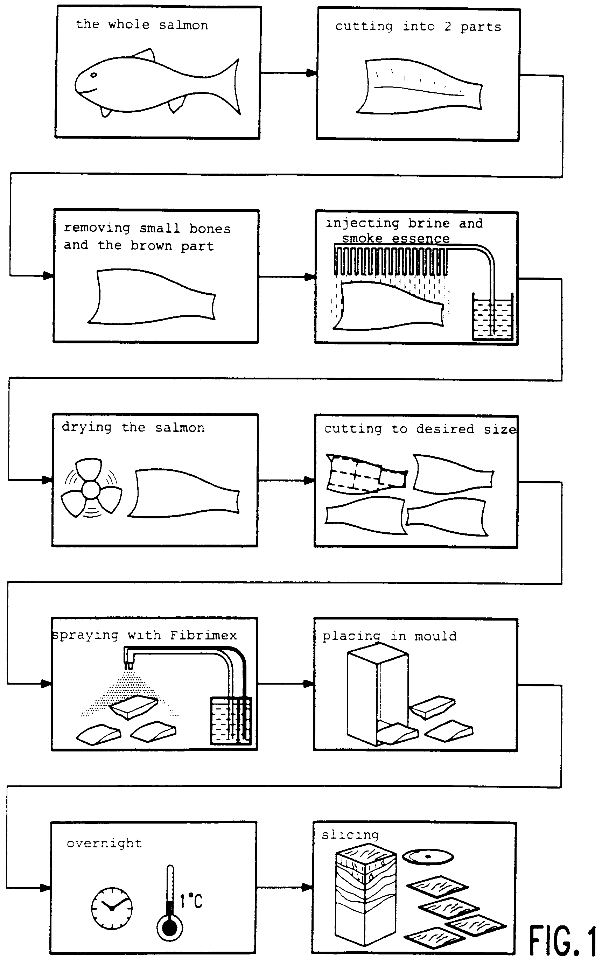

Figure 1 shows the various steps of a preferred embodiment of a method with which a device according to the invention is applied. A whole salmon is first cut into two equal parts along its plane of symmetry, after which the bones and the so-called "brown part" are removed. Then the salmon halves are soaked in brine and injected with a smoke essence, after which maturing and drying takes place. Then each salmon half is cut into substantially rectangular flat pieces by means of a measuring block of plastic material in a direction at least substantially perpendicular to the longitudinal direction of the salmon. Although the flat pieces may mutually differ in thickness, each flat piece has a thickness varying little (seen along the original outer surface of the salmon), so that adjacent flat pieces being placed in a mould mentioned hereunder abut against each other, under slight deformation of the flat pieces, while maintaining the original fish structure. If the slices of salmon to be eventually obtained are to be used on for example a white tin-sandwich, said flat pieces will have a length and a width which may independently of each other range from 8 - 12 cm, in particular from 9 - 11 cm. More particularly both dimensions are about 10 cm, so that square slices are obtained. Then a bonding agent (preferably the bonding agent which is commercially available under the name of "Fibrimex") is sprayed on the rectangular flat pieces of salmon, after which the flat pieces are placed in an elongated mould, with a bonding agent being provided between the respective flat pieces. Said placing in the mould of the flat pieces must be done in such a manner that the original longitudinal direction of the salmon from which the flat pieces originate extends parallel to the bottom of the mould. The advantage of this is that final slices of smoked salmon are obtained, wherein the original typical lengthwise structure of the salmon is retained. The mould containing the massive column of fish is cooled, so as to allow the bonding agent to complete the bonding process, and subsequently frozen, preferably-to a temperature of -5°C to -15°C, in particular -8°C to -12°C, in order to enable easy "processing" of the massive column of fish. Finally the cold massive column of fish is cut into slices having fixed dimensions and the desired weight at great speed, whereby each slice has retained the original characteristic structure of the salmon in its longitudinal direction.

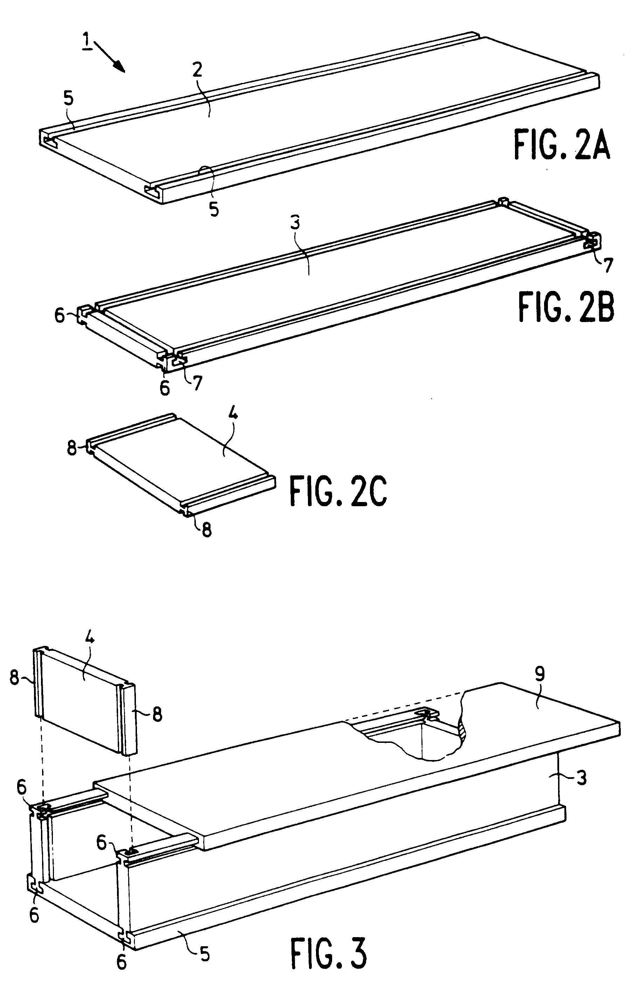

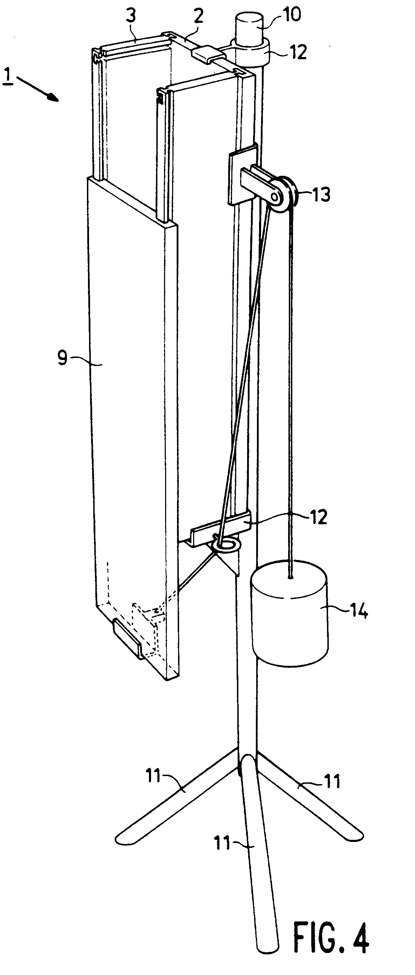

In Figures 2a, 2b and 2c various separate parts of a mould 1 as used with the method of Figure 1 and forming part of a device according to the invention can be distinguished. The mould 1 includes a bottom 2, two long side walls 3, two short side walls 4, as well as a cover (not shown). The bottom 2 comprises slots 5 along its longitudinal edges, into which corresponding sections 6 of the side walls 3 may be inserted. The side walls 3 in turn comprise slots 7 for receiving corresponding sections 8 of the short side walls 4 therein. Figure 3 shows the elongated mould 1 in assembled condition, provided with a cover 9. It will be apparent that the cover 9 is likewise provided with slots, into which sections 6 of the long side walls 3 may be inserted. In this manner a cover which is capable of sliding movement along said sections 6 in the longitudinal direction of the mould 1 is obtained, as will be explained in more detail with reference to Figure 4.

Figure 4 shows a device intended for being used with the method according to the invention, said device comprising the elongated mould 1 of Figures 2 and 3. Parts which correspond with parts illustrated in said Figures 2 and 3 are indicated by the same numerals. The elongated mould 1 is mounted in a frame, which is provided with a post 10 having legs 11. Metal clamps 12 are used, which detachably secure the mould 1 to the frame. The cover 9 is vertically movable along sections 6 of the long side walls 3 by means of a pulley construction 13 (using a counterweight 14), so that when the slices of salmon are stacked one on top of the other in the mould 1, the massive column of fish thus formed cannot fall out of the mould 1, since the cover 9 is moved along with the growing column of fish, manually in this embodiment. In a preferred embodiment the cover 9 is operated pneumatically, hydraulically or electrically.

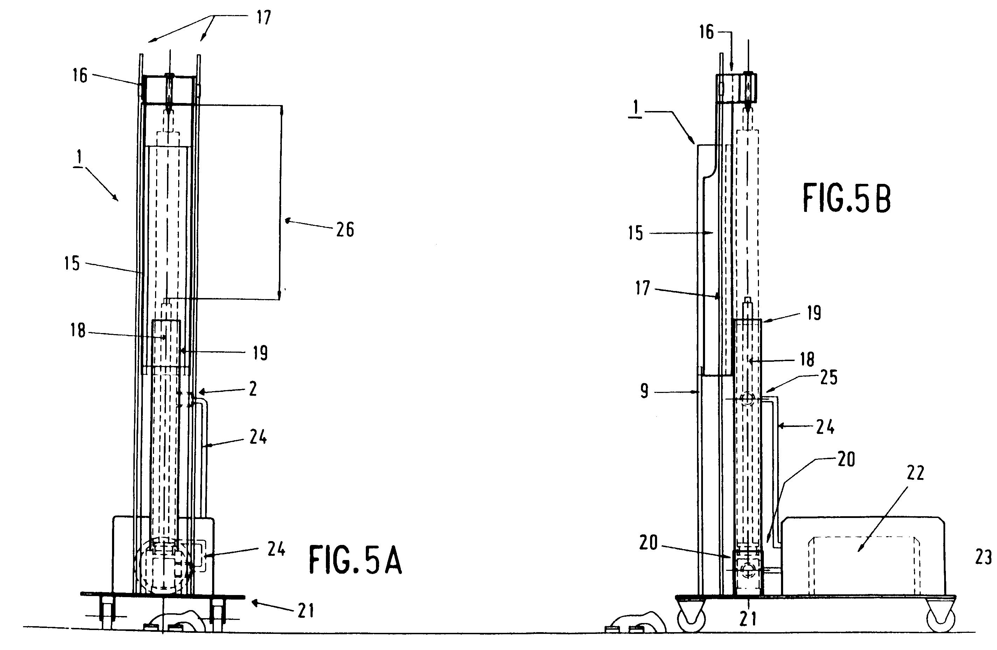

Figure 5 shows a schematic front view (5A) and a schematic side view (5B) respectively of another preferred embodiment of a device according to the invention. In this variant the mould 1 of Figures 1 and 2 is present within a holder 15, which is in turn secured to guide rods 17 by means of a fastening plate 16. Unlike the situation shown in Figure 4, cover 9 of mould 1 is stationary in the operating condition and the rest of mould 1 is moved up or down by means of a cylinder 18. Thus mould 1 is slowly moved downwards by cylinder 18 while being filled with slices of fish, so that when the massive column of fish grows in upward direction, it will not fall out of mould 1 and the same, ideal working height is provided at all times. Cylinder 18 is encased by a protective shell 19, with the unit being secured to an underlying mobile base 21 by means of fastening plates 20, on which base also the guide rods 17 are mounted. Mounted on said base is furthermore a hydraulic actuating pump 24 for cylinder 18, which is provided with a protective casing 23. The supply of hydraulic fluid to cylinder 18 takes place by means of lines 24 and a nipple connection 25. The uppermost and the lowermost positions of cylinder 18 are illustrated in dotted lines and in full lines respectively, whereby the stroke is indicated at 26.

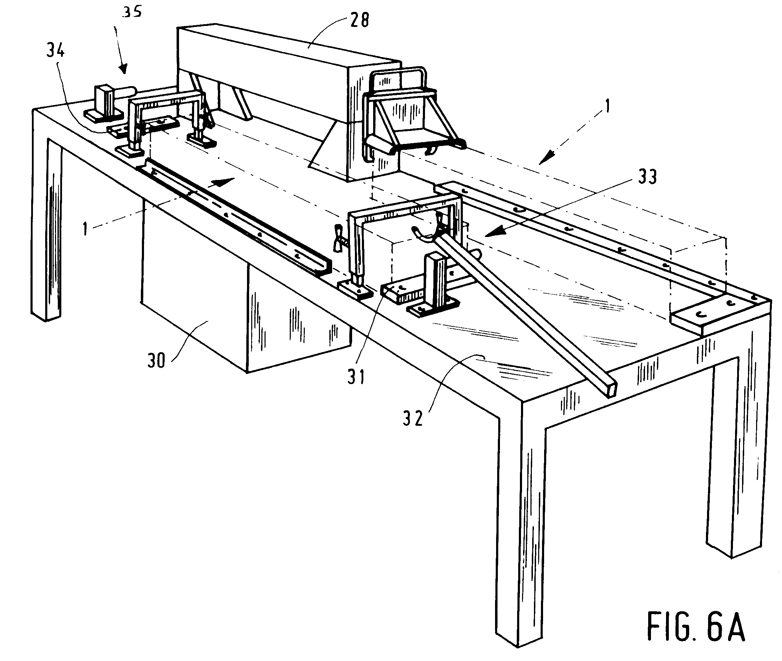

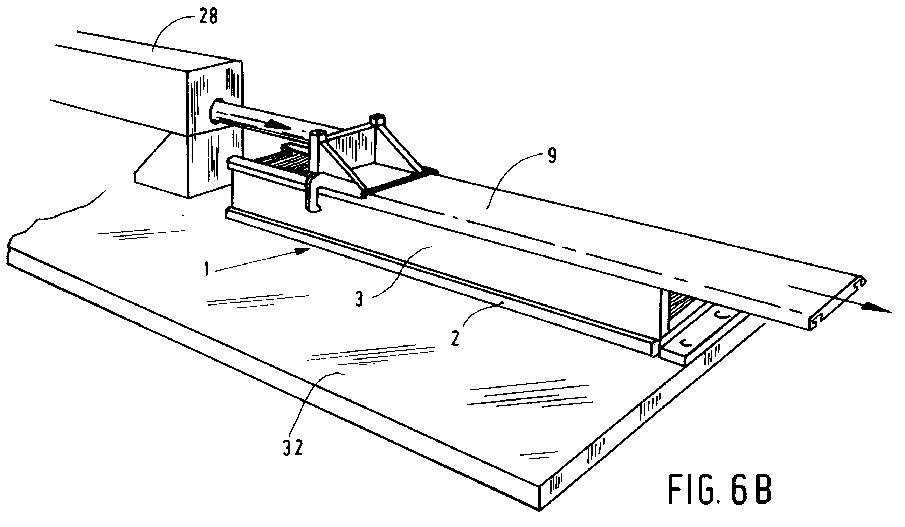

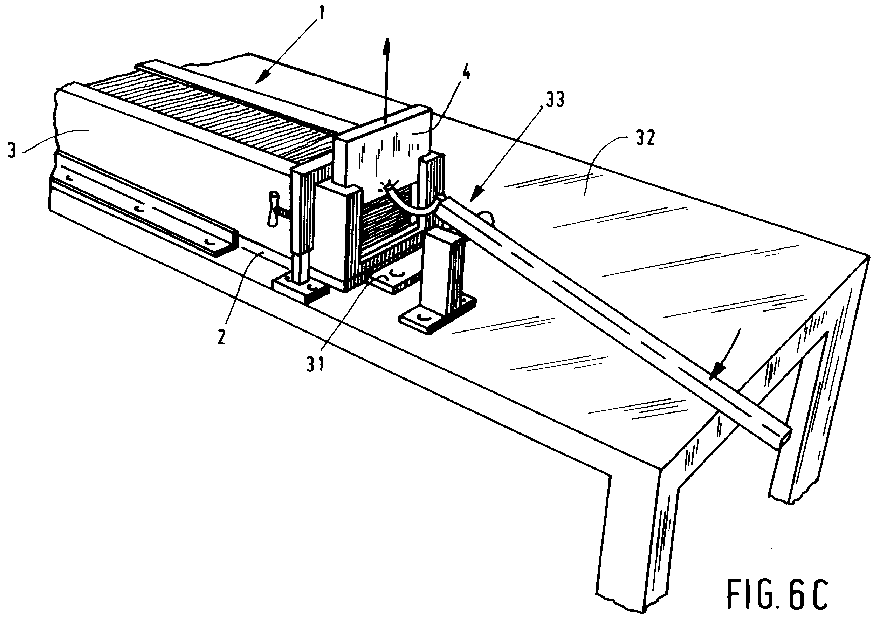

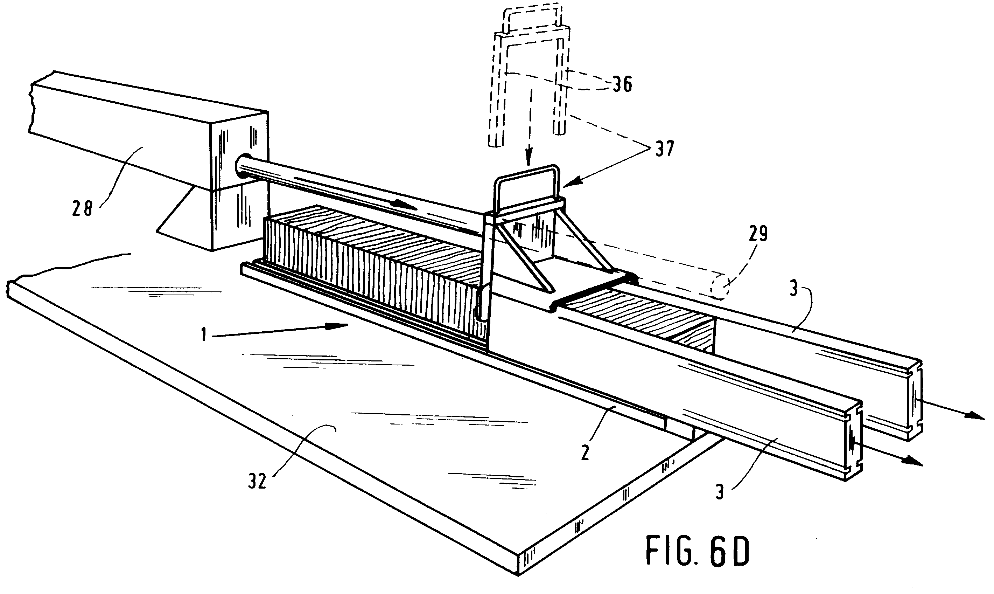

Figure 6 schematically shows several perspective views of a preferred embodiment of a mould opener forming part of a device according to the invention. Illustrated is (Figure 6A) a frame 32, on which the mould 1 of Figures 2 and 3 may be placed in order for the bottom 2, the long side walls 3, the short side walls 4 as well as the cover 9 of mould 1 to be removed, leaving behind a frozen massive column of fish to be subjected to further processing. First a hydraulic cylinder 28 is used to remove cover 9 from the frozen massive column of fish, to which end said cylinder pushes against the cross ends of cover 9 with a stop means (Figure 6B). The utmost position of the cylinder on the outgoing stroke is indicated at 29 (Figure 6D). Cylinder 28 is driven by a hydraulic pump 30 for that matter. Then mould 1 is moved against a right-hand stop 31 of frame 32 with a view to removing the short side walls 4, after which the right-hand short side wall 4 of mould 1 can be removed by means of a lever mechanism 33. Then mould 1 is moved to the left-hand stop 34 of frame 32, so that a second lever mechanism 35 can remove the left-hand short side wall 3 of mould 1 (Figures 6A and 6C). Then the long side walls 3 of mould 1 are removed, utilizing stops 36 of a substantially U-shaped body 37 (indicated separately by dotted lines in Figure 6D). The long side walls 3 are pushed against the stops 36, after which the cylinder removes the long side walls 3 on the outgoing stroke. Finally the massive column of fish can be removed from the bottom 2, after which said massive column of fish is ready to be cut into slices having fixed dimensions and the desired weight with great speed by means of an industrial meat slicer.

## Claims

1. A device for carrying out a method for processing fish, wherein the fish is cut into parts and the fish parts are subsequently bonded together by treating them with a bonding agent preferably consisting of a mixture of fibrinogen and thrombin, characterized in that said device comprises an elongated mould with means for holding said mould vertical in longitudinal direction during filling with flat pieces of salmon/halibut, said mould having a side relatively movable in the longitudinal direction of the mould so as to being able to relatively move up with a growing column of salmon/halibut in the mould, wherein internal cross-dimensions of the mould at least substantially correspond to cross-dimensions of the flat pieces of salmon/halibut placed one on top of each other in abutting relationship in the longitudinal direction of the mould and forming a massive column of salmon/halibut therein as a result of the flat pieces being deformed under the influence of gravity whilst retaining their typical salmon/halibut structure.

2. A device according to claim 1, wherein said mould is at least substantially rectangular, seen in cross-sectional view, with a cross length and cross width which vary, independently of each other, between 8 and 12 cm, in particular between 9 and 11 cm, but which are both preferably about 10 cm.

3. A device according to claim 1 or 2, wherein said mould is at least substantially rectangular, seen in cross-sectional view, with a cross length and cross width which vary, independently of each other, between 3 and 7 cm, in particular between 4 and 6 cm, but which are both preferably about 5 cm.

4. A device according to any one of the preceding claims 1 - 3, wherein said mould is provided with side walls, a bottom and a cover which are detachably connected with each other.

5. A device according to any one of the preceding claims 1 - 4, wherein said cover and the rest of the mould are movable with respect to each other.

6. A device according to claim 5, wherein a mould opener is provided for removing said mould in parts from the massive column of fish present therein.

7. A device according to claim 6, wherein said mould opener includes a cylinder construction and/or a lever construction.

## Patentansprüche

1. Eine Vorrichtung zur Durchführung eines Verfahrens zur Verarbeitung von Fisch, bei der der Fisch in Stücke geschnitten wird, und die Stücke daraufhin durch Behandlung mit einem Bindemittel, vorzugsweise bestehend aus einem Gemisch von Fibrinogen und Thrombin, miteinander verbunden werden, dadurch gekennzeichnet, daß besagte Vorrichtung eine längliche Form umfaßt mit Mitteln zum Senkrechthalten besagter Form in Längsrichtung während des Füllvorgangs mit flachen Stücken von Lachs/Heilbutt, wobei besagte Form eine Seite hat, welche relativ in Längsrichtung der Form bewegbar ist, um sich relativ mit einer in der Form wachsenden Säule von Lachs/Heilbutt aufwärts bewegen zu können, wobei die Innenquerschnittsabmessungen der Form im wesentlichen mindestens den Querschnittsabmessungen der flachen Lachs-Heilbutt-Stücke entsprechen, die aneinanderstoßend liegend in der Längsrichtung der Form aufeinandergelegt sind und die darin eine massive Säule aus Lachs/Heilbutt bilden als Ergebnis davon, daß die flachen Stücke unter dem Einfluß der Erdanziehung zwar verformt, jedoch ihre typische Lachs-/Heilbuttstrukur bewahren.

2. Eine Vorrichtung nach Anspruch 1, bei der besagte Form zumindest im wesentlichen, im Querschnitt betrachtet, rechteckig ist, mit einer Querschnittslänge und -breite, die, unabhängig voneinander, zwischen 8 und 12 cm variieren, insbesondere zwischen 9 und 11 cm, die aber beide vorzugsweise ungefähr 10 cm betragen.

3. Eine Vorrichtung nach Anspruch 1 oder 2, bei der besagte Form zumindest im wesentlichen, im Querschnitt betrachtet, rechteckig ist, mit einer Querschnittslänge und -breite, die, unabhängig voneinander, zwischen 3 und 7 cm variieren, insbesondere zwischen 4 und 6 cm, die aber beide vorzugsweise 5 cm betragen.

4. Eine Vorrichtung nach einem der vorangegangenen Ansprüche 1 - 3, wobei besagte Form mit Seitenwänden, einem Boden und einem Deckel ausgestattet ist, welche lösbar miteinander verbunden sind.

5. Eine Vorrichtung nach einem der vorangegangenen Ansprüche 1 - 4, wobei besagter Deckel und der Rest der Form relativ gegeneinander bewegbar sind.

6. Eine Vorrichtung nach Anspruch 5, bei der ein Formöffner vorgesehen ist, um besagte Form in Einzelteilen von der darin befindlichen massiven Fischsäule abzunehmen.

7. Eine Vorrichtung nach Anspruch 6, wobei besagter Formöffner eine Zylinderkonstruktion und/oder eine Hebelkonstruktion einschließt.

## Revendications

1. Dispositif pour la mise en oeuvre d'un procédé de traitement du poisson, dans lequel le poisson est découpé en morceaux et les morceaux de poisson sont ensuite reliés entre eux, en les traitant au moyen d'un agent de liaison consistant, de préférence, en un mélange de fibrinogène et de thrombine, caractérisé en ce que ledit dispositif comprend un moule allongé comportant des moyens pour maintenir ledit moule verticalement selon sa direction longitudinale, lorsqu'on le remplit au moyen de morceaux plats de saumon/flétan, ledit moule comportant un côté relativement mobile suivant la direction longitudinale du moule, de façon à pouvoir se déplacer relativement vers le haut, tandis que la colonne de saumon/flétan croît dans le moule, dans lequel les dimensions de la section transversale interne du moule correspondent au moins sensiblement aux dimensions en section transversale des morceaux plats de saumon/flétan placés les uns par dessus les autres en relation de butée, suivant la direction longitudinale du moule, en formant une colonne massive de saumon/flétan à l'intérieur du moule, avec pour résultat que les morceaux plats sont déformés sous l'influence de la gravité, tout en conservant leur structure typique de saumon/flétan.

2. Dispositif selon la revendication 1, dans lequel ledit moule est au moins sensiblement rectangulaire, vu en coupe transversale, avec une longueur et une largeur de coupe qui varient, indépendamment l'une de l'autre, entre 8 et 12 cm, en particulier entre 9 et 11 cm, mais qui sont de préférence toutes deux d'environ 10 cm.

3. Dispositif selon la revendication 1 ou la revendication 2, dans lequel ledit moule est au moins sensiblement rectangulaire, vu en coupe transversale, avec une longueur et une largeur de section qui varient, indépendamment l'une de l'autre, entre 3 et 7 cm, en particulier entre 4 et 6 cm, mais qui sont de préférence toutes deux d'environ 5 cm.

4. Dispositif selon l'une quelconque des revendications précédentes 1 à 3, dans lequel ledit moule est pourvu de parois latérales, d'un fond et d'un couvercle qui sont reliés de façon amovible les unes aux autres.

5. Dispositif selon l'une quelconque des revendications précédentes 1 à 4, dans lequel ledit couvercle et le reste du moule sont mobiles l'un par rapport à l'autre.

6. Dispositif selon la revendication 5, dans lequel un dispositif d'ouverture du moule est prévu pour retirer ledit moule, en plusieurs parties, d'avec la colonne massive de poisson qui y est présente.

7. Dispositif selon la revendication 6, dans lequel ledit dispositif d'ouverture de moule comprend un mécanisme à vérin et/ou un mécanisme à levier.
